# EUROPEAN PATENT APPLICATION

(11) **EP 4 361 509 A1**
(43) Date of publication of application: **01.05.2024**
(21) Application number: 22825212.8
(22) Date of filing: 07.06.2022
(51) Int. Cl.: F24F 1/0076, F24F 8/30, H01T 23/00, F24F 13/20

(54) **AIR CONDITIONER**

(30) Priority: 18.06.2021 KR 20210079329
(71) Applicant: LG Electronics Inc., Yeongdeungpo-gu Seoul 07336 (KR)
(72) Inventor: LEE, Shinhwi, Seoul 08592 (KR); JANG, Jaesoo, Seoul 08592 (KR); MOON, Muhyun, Seoul 08592 (KR)
(74) Representative: Ter Meer Steinmeister & Partner
(86) International application number: PCT/KR2022/008031
(87) International publication number: WO 2022/265286

(57) **Abstract**

The present disclosure relates to an air conditioner.

The air conditioner includes: a case having an inlet and an outlet; a fan disposed inside the case, and configured to generate an air flow from the inlet to the outlet; and an ionizer disposed on one side of the case and configured to generate ions in air flowing to the outlet, wherein the ionizer includes: a housing forming an outer appearance and having an opening hole formed in one side thereof; an electrode disposed in the housing and configured to generate ions through the opening hole; and a high voltage generator disposed inside the housing and configured to generate a high voltage by using the electrode, wherein the electrode has a plate shape and a pointed tip with a sharp end.

## Description

### Technical Field

The following description relates to an air conditioner, and more particularly to an air conditioner with an ionizer.

### Background Art

Air, which is discharged from an indoor unit of an air conditioner, directly affects users in an indoor space, such that it is required to purify the air discharged from an outlet of the indoor unit.

Korean Laid-Open Patent Publication No. 10-2015-0053136 discloses an ion generator or ionizer for generating ions in air discharged from an outlet.

In the prior art, there is disclosed an example of generating ions by using pattern electrodes. However, in the case of using the pattern electrodes to generate ions, there is a problem in that it is difficult to obtain an amount of ion generation at or above a predetermined level.

Korean Patent No. 10-2155591 discloses a pin electrode. The electrode is required to have low sharpness at the tip thereof in order to generate a large amount of ions. However, the pin electrode disclosed in the prior art has a limitation in that a shape of the pin electrode is changed by cutting the tip of the electrode, such that the sharpness may not be reduced to a predetermined level or below.

### Disclosure of Invention

### Technical Problem

It is an objective of the present disclosure to provide an air conditioner capable of increasing an amount of ion generation to enhance performance of removing bacteria in discharged air.

It is another objective of the present disclosure to provide an ionizer including an electrode which may be mass-produced and may ensure sharpness, and an air conditioner including the ionizer.

The objectives of the present disclosure are not limited to the aforementioned objectives and other objectives not described herein will be clearly understood by those skilled in the art from the following description.

### Technical Solution

In order to achieve the above and other objectives, an air conditioner according to an embodiment of the present disclosure includes: a case having an inlet and an outlet; a fan disposed inside the case, and configured to generate an air flow from the inlet to the outlet; and an ionizer disposed on one side of the case and configured to generate ions in air flowing to the outlet, wherein the ionizer includes: a housing forming an outer appearance and having an opening hole formed in one side thereof; an electrode disposed in the housing and configured to generate ions through the opening hole; and a high voltage generator disposed inside the housing and configured to generate a high voltage by using the electrode, wherein the electrode has a plate shape and a pointed tip with a sharp end, thereby increasing an amount of ions generated by the ionizer.

The electrode may be formed by press working, and thus may be mass-produced, while ensuring that the pointed tip has sharpness equal to or less than a predetermined length.

The electrode may have a first end at which the pointed tip is formed, and a second end which is opposite to the first end and to which the high voltage generator is connected, wherein the electrode may be coupled by soldering to the high voltage generator, thereby allowing the electrode to be easily coupled to the high voltage generator.

The pointed tip of the electrode may be 70 µm or less in size, thereby increasing the amount of ion generation.

The electrode may include at least one bending part, thereby reinforcing the rigidity of the plate-shaped electrode.

The housing may include a first housing covering a front of the high voltage generator and having an opening hole formed in one side, and a second housing disposed at a rear of the first housing and defining a space in which the high voltage generator is disposed, wherein the second housing may include an electrode support for fixing a position of the electrode that extends from the high voltage generator, thereby preventing the electrode from being deformed.

The first housing may include a front cover, and an opening part extending rearward from one end of the front cover and having the opening hole formed therein, wherein the second housing may include a rear cover forming a space in which the high voltage generator is disposed, and a side cover covering one side of the opening part, wherein the electrode may protrude through the side cover toward the opening part, thereby releasing ions through the opening hole.

While being disposed in the rear cover, the high voltage generator may be partially molded, and thus may be fixedly disposed in the housing and may prevent moisture from entering the high voltage generator.

The side cover may include a cover plate, an inner circumferential wall disposed along a periphery of the cover plate and disposed inside the circumferential wall, and a plurality of side ribs protruding from the cover plate toward the opening holes, wherein a through-hole, through which the electrode passes, may be formed in the cover plate.

The electrode support may include a rear support supporting a rear of the electrode, an upper wall disposed at an upper side of the electrode, and a lower wall disposed at a lower side of the electrode, such that the electrode may be stably disposed.

The rear support, the upper wall, and the lower wall may form an electrode mounting space in which the electrode is disposed, wherein the electrode mounting space may communicate with the through-hole, such that electrode may be disposed in the electrode mounting space, and the electrode may be disposed with an end exposed to the outside through the through-hole.

The high voltage generator may include a printed circuit board on which an electronic device is disposed, wherein an electrode groove, into which one end of the electrode is inserted, may be formed in the printed circuit board, such that while the electrode is mounted on the printed circuit board, the electrode may be soldered to the printed circuit board.

A length from front to rear of the electrode may be longer than a length from front to rear of the printed circuit board, thereby allowing the electrode to be easily mounted on the printed circuit board.

The electrode may include a ground electrode and a discharge electrode, wherein the ground electrode and the discharge electrode may be vertically spaced apart from each other.

Other detailed matters of the exemplary embodiments are included in the detailed description and the drawings.

### Advantageous Effects of Invention

An air conditioner according to the present disclosure has one or more of the following effects.

First, by using a plate-shaped electrode with a pointed tip, an amount of ion generation may be increased, thereby achieving the effect of enhancing sterilization performance within a short period of time.

Second, a plate-shaped electrode has a pointed tip and is formed by press working, such that sharpness of the pointed tip may be equal to or less than a predetermined length. In this manner, an electrode having sharpness equal to or less than a predetermined length may be mass-produced, thereby achieving the effect of facilitating manufacture of an ionizer capable of generating a predetermined amount or more of ions.

The effects of the present disclosure are not limited to the aforesaid, and other effects not described herein will be clearly understood by those skilled in the art from the following description of the appended claims.

### Brief Description of Drawings

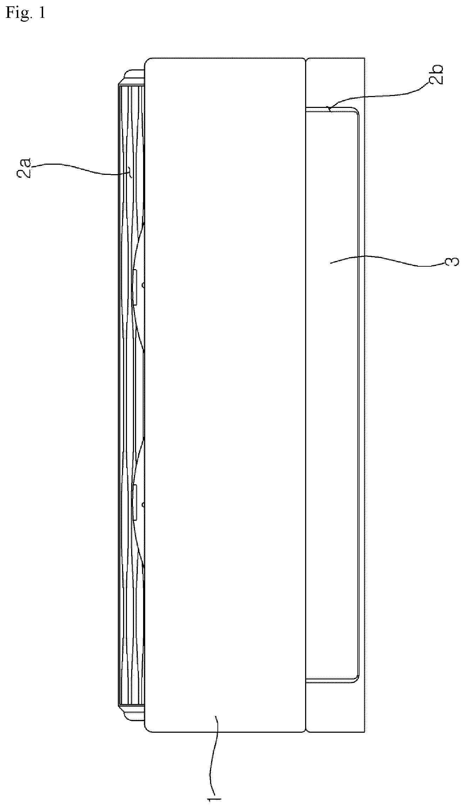

FIG. 1 is a front view of an air conditioner according to an embodiment of the present disclosure;
FIG. 2 is a perspective view of one side of an air conditioner in which an ionizer is disposed according to an embodiment of the present disclosure;
FIG. 3 is a perspective view of an ionizer according to an embodiment of the present disclosure.
FIG. 4 is an exploded perspective view of an ionizer according to an embodiment of the present disclosure.
FIG. 5 is a cross-sectional view of an ionizer according to an embodiment of the present disclosure.
FIG. 6 is a cross-sectional perspective view for explaining electrode arrangement in an ionizer according to an embodiment of the present disclosure.
FIG. 7 is a perspective view of a high voltage generator and an electrode according to an embodiment of the present disclosure.
FIG. 8A is a diagram illustrating data on amounts of ions dispersed at a distance of 10 cm from an ionizer of the present disclosure and an ionizer with an existing pattern electrode.
FIG. 8B is a diagram illustrating data on amounts of ions dispersed at a distance of 15 cm from an ionizer of the present disclosure and an ionizer with an existing pattern electrode.
FIG. 9 is a diagram illustrating data, shown in numerical form, on variations in amounts of ions generated by an ionizer of the present disclosure and an ionizer with an existing pattern electrode.
FIG. 10 is a diagram illustrating data obtained by comparing amounts of generated ions according to sharpness of an electrode of an ionizer of the present disclosure.

### Mode for the Invention

Advantages and features of the present disclosure and methods for achieving the same will become apparent from the embodiments described below in conjunction with the accompanying drawings. However, the present disclosure is not limited to the embodiments disclosed herein, and may be implemented in various different forms. The embodiments are provided so that disclosure of this invention will be thorough and complete and will fully convey the concept of the invention to those skilled in the art, and the disclosure is defined only by the appended claims. Like reference numerals refer to like elements throughout the specification.

Hereinafter, an air conditioner of the present disclosure will be described in detail with reference to the accompanying drawings.

The air conditioner of the present disclosure may be an indoor unit installed in a room and configured to draw in indoor air and to discharge heat-exchanged air.

The air conditioner of the present disclosure includes a case 1 having an inlet 2a formed at one side and an outlet 2b formed at another side, a fan (not shown) disposed inside the case 1 and configured to generate an air flow from the inlet 2a to the outlet 2b, a heat exchanger (not shown) disposed inside the case 1 and configured to perform heat exchange of air flowing in the case, and an ionizer 10 disposed inside the case 1 and configured to generate ions toward the outlet 2b.

The air conditioner of the present disclosure may include a vane 3 movably disposed in the case 1 and configured to change a direction of air discharged through the outlet 2b. The vane 3 may be changed in position so as to close the outlet 2b or to control a direction of air discharged through the outlet 2b.

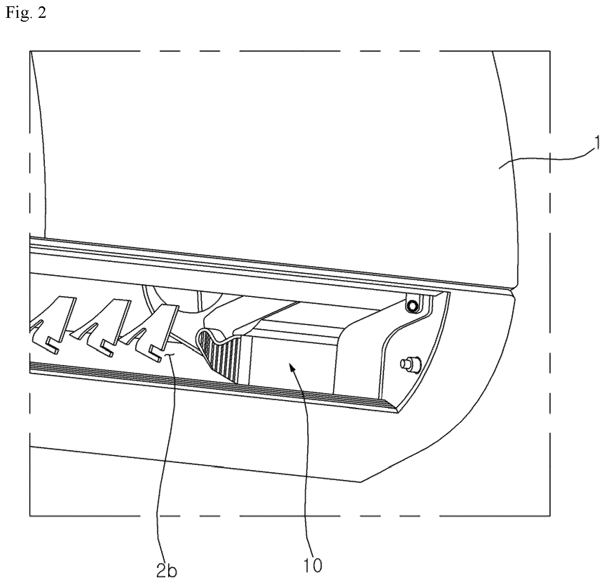

Referring to FIG. 2, the ionizer 10 may be located upstream of the vane 3 to generate ions in air flowing to the outlet 2b. The ionizer 10 may be disposed on one side of the outlet 2b formed in a left-right direction.

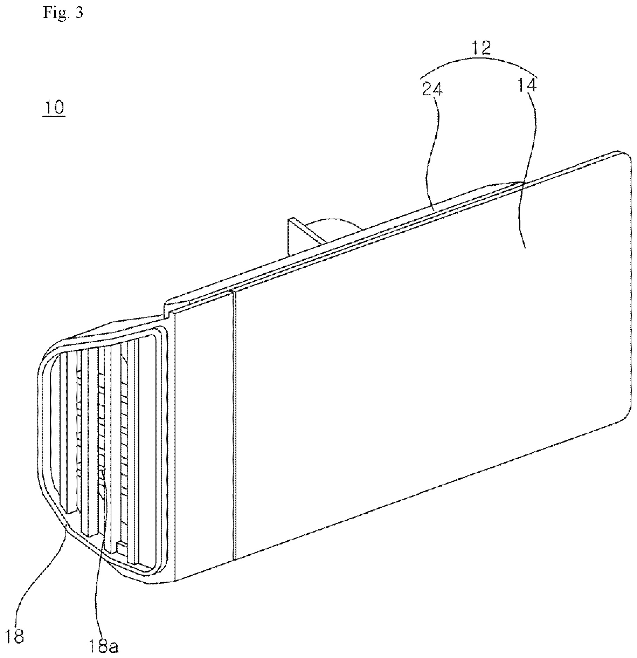

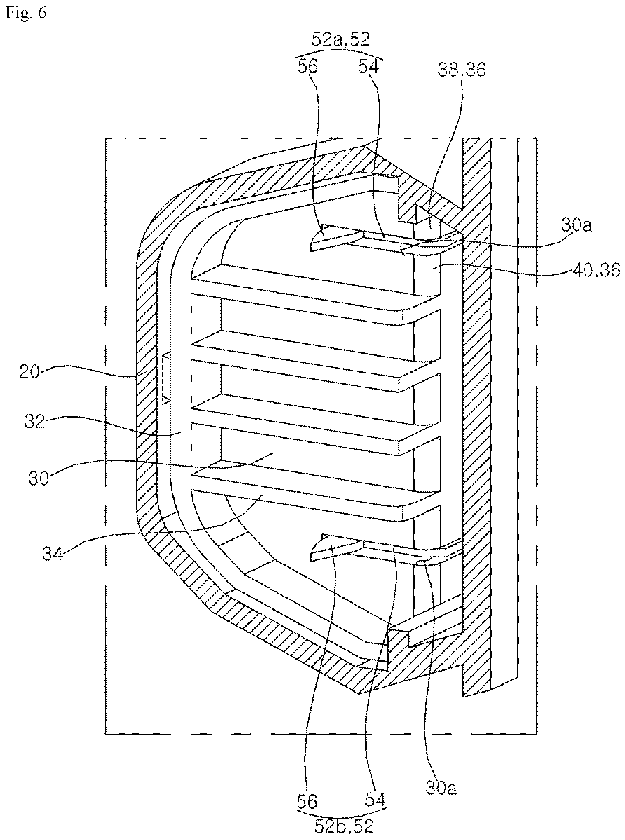

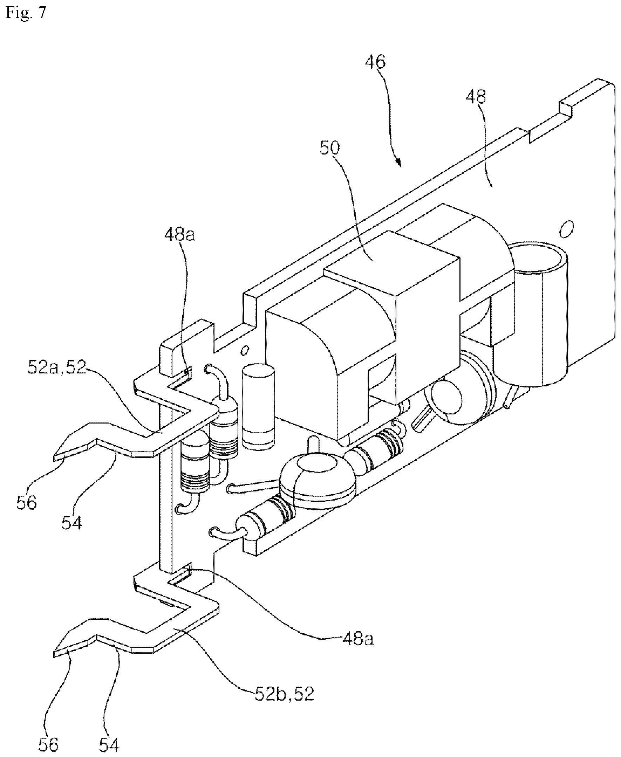

Hereinafter, the ionizer 10 of the present disclosure will be described with reference to FIGS. 3 to 7.

The ionizer 10 of the present disclosure includes a housing 12 forming an outer appearance and having an opening hole 18a formed in one side thereof, an electrode 52 disposed inside the housing 12 and configured to generate ions outside the housing 12 through the opening hole 18a, and a high voltage generator 46 disposed inside the housing 12 and configured to generate a high voltage by using the electrode 52.

The housing 12 may include a first housing 14 covering the front of the high voltage generator 46 and having the opening hole 18a formed in one side thereof, and a second housing 24 disposed at the rear of the first housing 14 and defining a space in which the high voltage generator 46 is disposed.

The first housing 14 includes a front cover 16 and an opening part 18 having the opening hole 18a formed therein. The front cover 16 may be disposed to cover the front of the high voltage generator 46.

The opening part 18 may extend rearward from one end of the front cover 16. A plurality of opening holes 18a may be formed in the opening part 18. The opening part 18 includes a circumferential wall 20 having the opening holes 18a formed therein, and a plurality of ribs 22 formed on the circumferential wall 20 and spaced apart from each other between the opening holes 18a. The opening part 18 has a plurality of opening holes 18a formed between the plurality of ribs 22.

The second housing 24 includes a rear cover 26 forming a space in which the high voltage generator 46 is disposed, and a side cover 28 covering one side of the opening part 18. The electrode 52 protrudes through the side cover 28 toward the opening part 18.

The rear cover 26 forms a space 26a in which the high voltage generator 46 is disposed. While being disposed in the rear cover 26, the high voltage generator 46 may be partially molded. Accordingly, the high voltage generator 46 may be fixedly disposed in the housing 12 and may prevent moisture from entering from the outside.

The side cover 28 may cover one side of the opening part 18. The side cover 28 may be disposed to be inserted into the circumferential wall 20 of the opening part 18.

The side cover 28 includes a cover plate 30, an inner circumferential wall 32 disposed along the periphery of the cover plate 30 and disposed inside the circumferential wall 20, and a plurality of side ribs 34 protruding from the cover plate 30 toward the opening holes 18a. When the first housing 14 and the second housing 24 are coupled to each other, the inner circumferential wall 32 is disposed inside the circumferential wall 20.

The cover plate 30 has a through-hole 30a through which the electrode 52 passes.

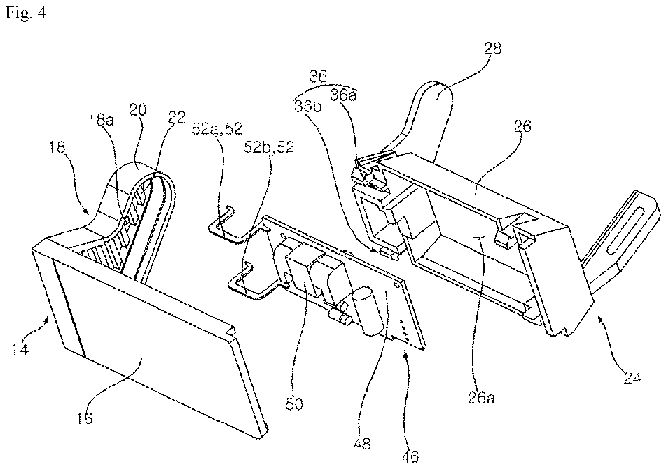

The second housing 24 includes an electrode support 36 for fixing the position of the electrode 52. Referring to FIG. 4, the electrode support 36 includes a first electrode support 36a for fixing the position of an electrode 52a disposed at an upper side, and a second electrode support 36b for fixing the position of an electrode 52b disposed at a lower side.

The electrode support 36 may support rear, top, and bottom sides of the electrode 52. The electrode support 36 include a rear support 38 supporting the rear of the electrode, an upper wall 40 disposed at an upper side of the electrode 52, and a lower wall 42 disposed at a lower side of the electrode 52.

The rear support 38, the upper wall 40, and the lower wall 42 form an electrode mounting space 36as in which the electrode 52 is disposed. The electrode 52 is disposed in the electrode mounting space 36as, such that its position may be stably supported. The electrode mounting space 36as may communicate with the through-hole 30a.

The electrode 52 of the present disclosure has a plate shape which is pressed by press working, such that rigidity in a vertical direction (thickness direction of the electrode) may be weak. However, the electrode 52 is disposed in the electrode mounting space 36as formed in the electrode support 36, and thus may be stably mounted and its shape may be maintained.

The high voltage generator 46 includes a printed circuit board 48 and an electronic device 50 disposed on the printed circuit board 48 and configured to generate a high voltage. An electrode groove 48a, into which the electrode 52 is inserted, is formed in one side of the printed circuit board 48. Another end of the electrode 52 may be inserted into the electrode groove 48a.

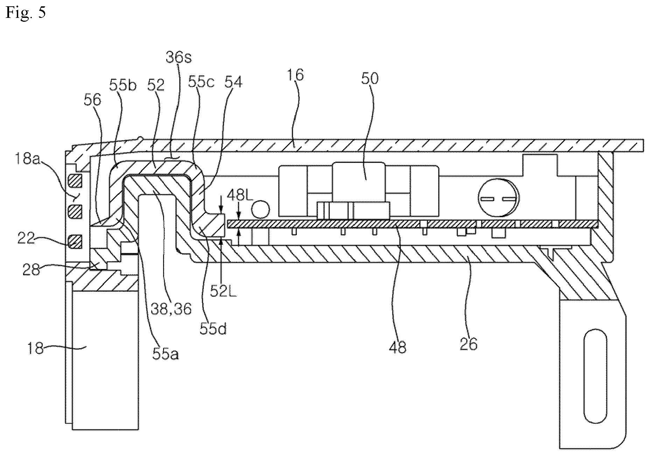

Referring to FIG. 5, a length 52L from front to rear of the electrode 52 may be longer than a length 48L from front to rear of the printed circuit board 48. While being inserted into the electrode groove 48a of the printed circuit board 48, the electrode 52 may be fixed by soldering to the printed circuit board 48. While the electrode 52 is mounted on the printed circuit board 48, front and rear ends of the electrode 52 may protrude. Accordingly, the electrode 52 mounted on the printed circuit board 48 may be easily soldered.

The electrode 52 of the present disclosure has a plate shape, and thus may remain inserted into the electrode groove 48a of the printed circuit board 48. Accordingly, while the electrode 52 is mounted on the printed circuit board 48a, the electrode 52 may be fixed by soldering to the printed circuit board 48. A pin-shaped electrode is difficult to remain mounted in a structure corresponding to the electrode groove of the printed circuit board, and thus may not facilitate manufacture as in the present disclosure.

The electrode 52 may include a discharge electrode 52a and a ground electrode 52b. When a predetermined DC pulse high voltage is applied by the electronic device 50 of the high voltage generator 46, insulation breakdown occurs between the discharge electrode 52a and the ground electrode 52, and a discharge phenomenon occurs such that a predetermined plasma region is formed between the discharge electrode 52a and the ground electrode 52, and thus ions may be finally generated. The discharge electrode 52a and the ground electrode 52 may be vertically spaced apart from each other.

The electrode 52 has one side connected to the high voltage generator 46. The electrode 52 has a body 54 elongated and connected to the high voltage generator 46, and a pointed tip 56 with a sharp end, the pointed tip 56 formed at a second end of the body 54 to which the high voltage generator 46 is not connected. The body 54 has a first end connected to the high voltage generator 46, and the second end at which the pointed tip 56 is formed.

The pointed tip 56 protrudes from the through-hole 30a toward the opening part 18.

The body 54 may include at least one bending part 55. The bending part 55 may reinforce the rigidity of the body 54.

Referring to FIG. 5, the body 54 includes four bending parts 55a, 55b, 55c, and 55d. Referring to FIG. 5, when viewed from above, the body 54 has an approximately "U-shape." The bending part 55 may be omitted depending on the position of the pointed tip 56 and the position of the high voltage generator 46.

It can be seen that the electrode 52 with the pointed tip 56 of the present disclosure has greatly increased, compared to an existing pattern electrode structure.

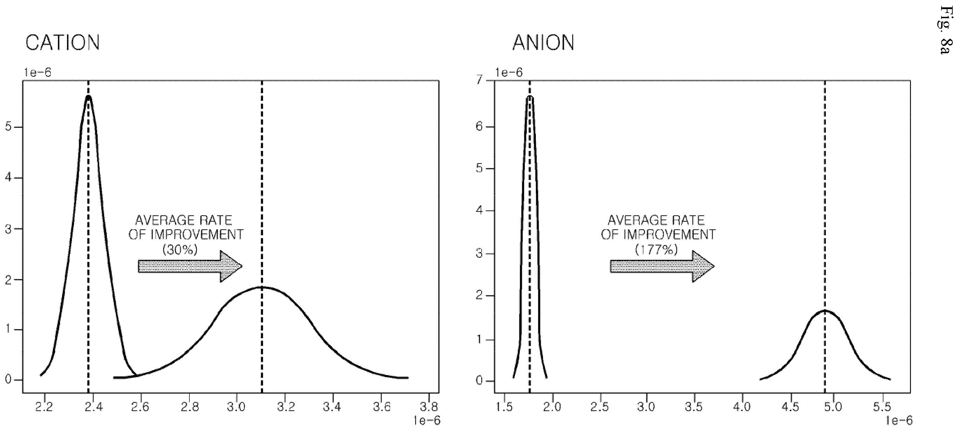

Referring to FIGS. 8A to 9, it can be seen that the amount of ion generation has greatly increased in the structure of a plate-shaped electrode with the pointed tip 56, compared to the case of using the existing pattern electrode.

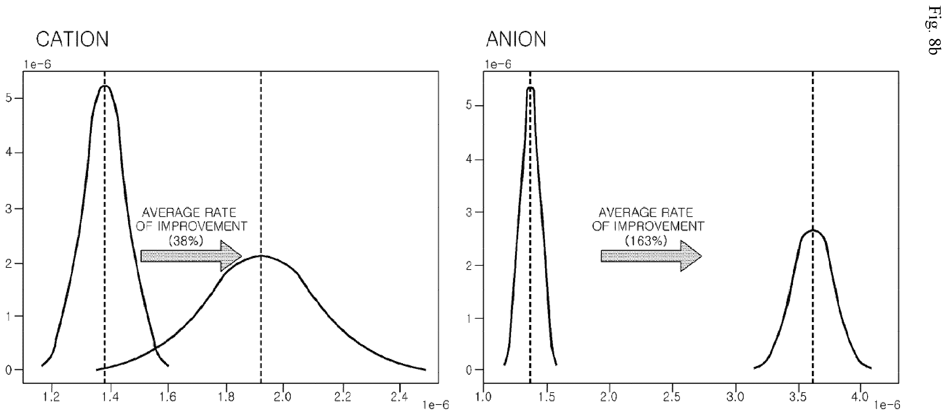

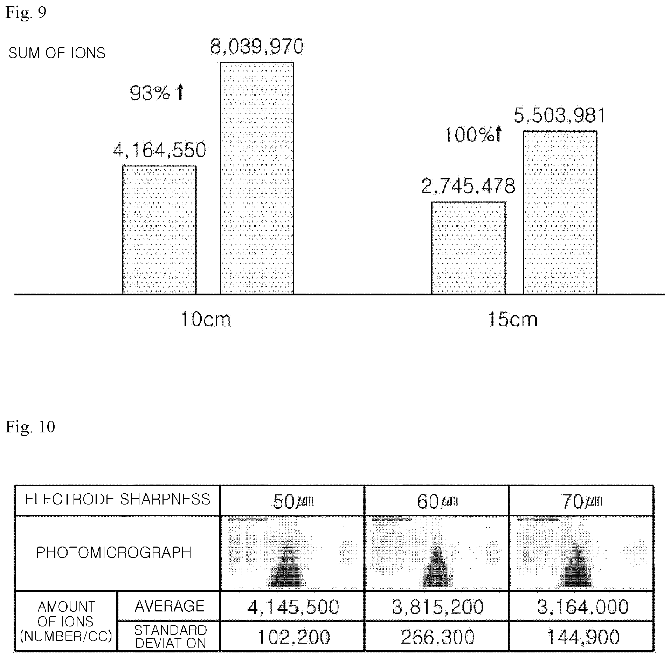

That is, referring to FIGS. 8A and 9, it can be seen that based on an amount of ion dispersion at a distance of 0.1 m, an amount of ion generation increases by 93 % compared to the existing pattern electrode. In addition, referring to FIGS. 8B and 9, it can be seen that based on an amount of ion dispersion at a distance of 0.15 m, an amount of ion generation increases by 100 % compared to the existing pattern electrode.

The increase in the amount of ion generation may lead to an improved performance of sterilization of the air discharged through the outlet 2b. The increase in the amount of ions generated by the ionizer 10 produces the effect of reducing an operating time of the ionizer 10.

That is, in order to kill 99.9 % of the E. coli bacteria, an existing ionizer is required to operate for 30 minutes, but the ionizer of the present disclosure may achieve the same effect by operating 20 minutes.

Further, the existing ionizer kills 99.6 % of Staphylococcus aureus by operating for 60 minutes, but the ionizer of the present disclosure may achieve the effect of killing 99.9 % of Staphylococcus aureus by operating for 60 minutes.

The electrode 52 has a plate shape, and the pointed tip 56 with a sharp end is formed at one side thereof. The electrode of the present disclosure may be pressed by press working. The electrode 52 of the present disclosure has a flat plate shape and is pressed by press working, such that an end of the pointed tip 56 may be maintained in a sharper condition.

Sharpness of the end of the pointed tip 56 may be equal to or less than 70 µm. Here, the sharpness refers to the thickness of a distal end of the pointed tip. Instead of forming a pointed tip by cutting a needle structure, the electrode 52 of the present disclosure is pressed into a plate shape by press working and is formed with the pointed tip at an end thereof. Accordingly, the sharpness of the end of the pointed tip 56 may be equal to or less than 70 µm or less. The sharpness of the end of the pointed tip 56 may be preferably 60 µm or less.

Referring to FIG. 10, if the sharpness of the pointed tip 56 is 70 µm, three million or more ions may be generated at one electrode. It can be seen that the amount of ion generation increases by 50 % or more compared to an amount of ions generated at the existing pattern electrode. Further, if the sharpness of the pointed tip 56 is 60 µm or less, it can be seen that the amount of ion generation increases by 90 % or more compared to the existing pattern electrode.

While the present disclosure has been particularly shown and described with reference to preferred embodiments thereof, it will be understood by those skilled in the art that the present disclosure is not limited to those exemplary embodiments and various changes in form and details may be made therein without departing from the scope and spirit of the invention as defined by the appended claims and should not be individually understood from the technical spirit or prospect of the present disclosure.

## Claims

1. An air conditioner comprising:
a case having an inlet and an outlet;
a fan disposed inside the case, and configured to generate an air flow from the inlet to the outlet; and
an ionizer disposed on one side of the case and configured to generate ions in air flowing to the outlet,
wherein the ionizer comprises:
a housing forming an outer appearance and having an opening hole formed in one side thereof;
an electrode disposed in the housing and configured to generate ions through the opening hole; and
a high voltage generator disposed inside the housing and configured to generate a high voltage by using the electrode,
wherein the electrode has a plate shape and a pointed tip with a sharp end.

2. The air conditioner of claim 1, wherein the electrode is formed by press working.

3. The air conditioner of claim 1, wherein the electrode has a first end at which the pointed tip is formed, and a second end which is opposite to the first end and to which the high voltage generator is connected,
wherein the electrode is coupled by soldering to the high voltage generator.

4. The air conditioner of claim 1, wherein the pointed tip of the electrode is 70 µm or less in size.

5. The air conditioner of claim 1, wherein the electrode comprises at least one bending part.

6. The air conditioner of claim 1, wherein the housing comprises a first housing covering a front of the high voltage generator and having an opening hole formed in one side, and a second housing disposed at a rear of the first housing and defining a space in which the high voltage generator is disposed,
wherein the second housing comprises an electrode support for fixing a position of the electrode that extends from the high voltage generator.

7. The air conditioner of claim 6, wherein the first housing comprises a front cover, and an opening part extending rearward from one end of the front cover and having the opening hole formed therein,
wherein the second housing comprises a rear cover forming a space in which the high voltage generator is disposed, and a side cover covering one side of the opening part,
wherein the electrode protrudes through the side cover toward the opening part.

8. The air conditioner of claim 7, wherein while being disposed in the rear cover, the high voltage generator is partially molded.

9. The air conditioner of claim 7, wherein the side cover comprises a cover plate, an inner circumferential wall disposed along a periphery of the cover plate and disposed inside the circumferential wall, and a plurality of side ribs protruding from the cover plate toward the opening holes,
wherein a through-hole, through which the electrode passes, is formed in the cover plate.

10. The air conditioner of claim 9, wherein the electrode support comprises a rear support supporting a rear of the electrode, an upper wall disposed at an upper side of the electrode, and a lower wall disposed at a lower side of the electrode.

11. The air conditioner of claim 10, wherein the rear support, the upper wall, and the lower wall form an electrode mounting space in which the electrode is disposed,
wherein the electrode mounting space communicates with the through-hole.

12. The air conditioner of claim 1, wherein the high voltage generator comprises a printed circuit board on which an electronic device is disposed,
wherein an electrode groove, into which one end of the electrode is inserted, is formed in the printed circuit board.

13. The air conditioner of claim 12, wherein a length from front to rear of the electrode is longer than a length from front to rear of the printed circuit board.

14. The air conditioner of claim 1, wherein the electrode comprises a ground electrode and a discharge electrode,
wherein the ground electrode and the discharge electrode are vertically spaced apart from each other.
